# EUROPÄISCHE PATENTSCHRIFT

(11) **EP 1 369 756 B1**
(45) Veröffentlichungstag und Bekanntmachung des Hinweises auf die Patenterteilung: **26.03.2008**
(21) Anmeldenummer: 03012709.6
(22) Anmeldetag: 04.06.2003
(51) Int. Cl.: G05B 19/05

(54) **Verfahren zur Vermeidung von Fehlzugriffen auf Datenstrukturen**
Method for preventing failed access to a data structure
Méthode pour éviter des erreurs d' accès à une structure des données

(30) Priorität: 04.06.2002 DE 10224733
(43) Veröffentlichungstag der Anmeldung: 10.12.2003
(73) Patentinhaber: SIEMENS AKTIENGESELLSCHAFT, 80333 München (DE)
(72) Erfinder: Beck, Hans-Joachim, 76287 Rheinstetten (DE); Becker, Peter, 76571 Gaggenau (DE)

(56) Entgegenhaltungen:
- DE-A- 4 236 247
- DE-A- 10 111 393
- US-A- 5 781 776

## Beschreibung

Die Erfindung betrifft ein Verfahren zur Vermeidung von Fehlzugriffen auf Datenstrukturen gemäß dem Oberbegriff des Anspruchs 1. Weiter betrifft die Erfindung auch ein Automatisierungssystem mit einer Automatisierungseinheit mit einer Datenstruktur, einer Programmiereinheit, die zur Veränderung der Datenstruktur in der Automatisierungseinheit vorgesehen ist, und wenigstens einer Anzeige- und Bedieneinheit, zur Steuerung und Überwachung der Automatisierungseinheit.

Automatisierungssysteme werden für Prozesssteuerungen beispielsweise in der chemischen Industrie eingesetzt, aber auch in der verarbeitenden Industrie und im Maschinenbau.

Automatisierungssysteme umfassen üblicherweise wenigstens eine Automatisierungseinheit zur Steuerung eines Teilprozesses, weiter werden beispielsweise Anzeige- und Bedieneinheiten zur Überwachung und Programmiereinheiten zur Weiterentwicklung der Prozesssteuerung eingesetzt. Über die Anzeige- und Bedieneinheiten werden die Automatisierungseinheiten überwacht und gesteuert. Es werden beispielsweise Eingaben von einem Benutzer über Bediensysteme zur Automatisierungseinheit übertragen. Weiterhin werden Prozessgrößen der Automatisierungseinheit auf den Anzeige- und Bedieneinheiten ausgegeben, um dem Benutzer wichtige Informationen zum Ablauf der jeweiligen Prozesse zukommen zu lassen und ihm Gelegenheit zu geben, in den Prozess einzugreifen. An ein Automatisierungssystem können mehrere Automatisierungseinheiten und viele unterschiedliche Anzeige- und Bedieneinheiten angeschlossen werden.

Ein Automatisierungssystem läuft meist ununterbrochen, da beispielsweise chemische Prozesse nicht ohne weiteres angehalten werden können, wobei sich der unterbrechungsfreie Ablauf auf alle oder nur auf besonders wichtige Automatisierungseinheiten beschränken kann. Verbesserungen bzw. Erweiterungen in den abzuarbeitenden Programmen und Datenstrukturen einer Automatisierungseinheit müssen demzufolge im laufenden Betrieb in die entsprechende Automatisierungseinheit eingebracht werden. Dazu wird eine Programmiereinheit verwendet, mit der die Datenstruktur der Automatisierungseinheit verändert werden kann. Derartige Datenstrukturveränderungen werden in den Programmiereinheiten, die auch als Engineeringsysteme bezeichnet werden, entwickelt und getestet und nach Vollendung zur Automatisierungseinheit übertragen.

In einem solchen aus vielen unterschiedlichen Komponenten zusammengesetzten Automatisierungssystem spielt die Konsistenz der Datenstrukturen für einen fehlerfreien Ablauf eine entscheidende Rolle. Eine Veränderung der Datenstruktur einer Automatisierungseinheit müsste gleichzeitig allen angeschlossenen Anzeige- und Bedieneinheiten mitgeteilt werden, da es sonst zu Fehlzugriffen kommt. So kann beispielsweise eine Datenstruktur in einem Datenbaustein in einer Automatisierungseinheit von einer Programmiereinheit verändert werden, beispielsweise durch Hinzufügen oder Löschen einer Variablen. Wenn zu diesem Zeitpunkt gleichzeitig eine Anzeige- und Bedieneinheit auf diese Datenstruktur des entsprechenden Datenbausteins der Automatisierungseinheit beispielsweise mittels eines Schreib- oder Lesevorgangs zugreift, kommt es zu einem Fehlzugriff, da bei der Adressierung der Variablen wenigstens teilweise mit absoluten Adressen gearbeitet wird. Die Variablen sind zum Beispiel in Datenbausteinen abgespeichert, wobei ein Zugriff auf diesen Datenbaustein durch Angabe einer Datenbausteinnummer, eines Offsets und einer Länge der abzufragenden Variablen erfolgt. Wird eine Variable eingefügt oder gelöscht, ist der absolute Offset nicht mehr richtig, so dass es zu Fehlzugriffen kommt, beispielsweise wird die falsche Variable gelesen oder geschrieben.

Dieses beschriebene Problem tritt insbesondere dann auf, wenn die Adressierung eines Objektes, beispielsweise einer Variablen, nicht vollständig logisch/symbolisch sondern mit einer ganz oder wenigstens teilweisen Absolutadressierung erfolgt.

Dieses Problem würde bei einer komplett logisch/symbolisch adressierten Datenstruktur nicht auftreten. Der Aufwand einer vollständig logisch/symbolischen Adressierung ist jedoch deutlich höher, als bei einer teilweisen Absolutadressierung.

In bekannten Automatisierungssystemen wird wegen des hohen Aufwands einer vollständig logischen Adressierung dieses Problem dadurch gelöst, dass entweder Fehlzugriffe durch Adressänderungen in Kauf genommen werden oder dass bei der Änderung von Datenstrukturen bekannte Regeln befolgt werden, beispielsweise neue Variablen nur am Ende der Datenstruktur einzufügen oder Datenstrukturänderungen nicht während der Laufzeit der Automatisierungseinheit vorgenommen werden.

In der DE 101 11 393 A1 ist ein Programmiergerät offenbart, welches mit einem Eingabe- und Visualisierungsmodul und einem Bedien- und Visualisierungsmodul versehen ist. Es sind Maßnahmen vorgesehen, welche verhindern, dass ein gleichzeitiger Zugriff auf eine Programmquelle einer Maschinensteuerung erfolgt.

Aufgabe der Erfindung ist es deshalb, ein Verfahren und ein Automatisierungssystem anzugeben, mit denen Fehlzugriffe von Anzeige- und Bedieneinheiten auf Datenstrukturen in einer Automatisierungseinheit während der Laufzeit bei wenigstens teilweiser Absolutadressierung vermieden werden.

Im Hinblick auf das Verfahren wird diese Aufgabe durch die im kennzeichnenden Teil des Anspruchs 1 angegebenen Maßnahmen gelöst.

Der Grundgedanke der Erfindung besteht darin, dass sich bei einem Automatisierungssystem eine oder mehrere Anzeige- und Bedieneinheiten in einer Automatisierungseinheit bei einer Datenstruktur anmelden, um eine Datenstrukturänderung zu erkennen. Anschließend aktualisieren die Anzeige- und Bedieneinheiten ihre Datenstrukturbeschreibungen durch Abgleich der Datenstrukturbeschreibungen mit der Programmiereinheit.

Somit wird sichergestellt, dass die Variablenbeschreibung der Datenstruktur in der zugreifenden Anzeige- und Bedieneinheit und in der Programmiereinheit und damit bezüglich der Automatisierungseinheit gleich ist. Dazu ist erfindungsgemäß eine Änderungsinformation in der Automatisierungseinheit abgespeichert. Jede Anzeige- und Bedieneinheit meldet sich beim Verbindungsaufbau bei der Automatisierungseinheit an. Wenn eine Anzeige- und Bedieneinheit eine Verbindung aufbaut oder bereits aufgebaut hat, erfolgt die Anmeldung bei der Datenstruktur, indem registriert wird, dass sich für die entsprechende Datenstruktur eine Anzeige- und Bedieneinheit zur Strukturüberwachung anmeldet, um auf die Variablen in der Datenstruktur zuzugreifen. Weiter wird je nach Zustand der Änderungsinformation ein Zugriff auf die entsprechende Variable erlaubt oder verhindert. Durch einen entsprechenden Zustand der Änderungsinformation wird angezeigt, ob sich eine Datenstruktur verändert hat und ob auf diese Variable zugegriffen werden kann oder nicht.

Es ist in einer einfachen Ausführung des Verfahrens auch möglich, den Zugriff in jedem Fall zu ermöglichen, jedoch wird im Fall einer erfolgten Datenstrukturänderung der Anzeige- und Bedieneinheit mittels Änderungsmeldung mitgeteilt, dass ein Fehlzugriff wegen einer Datenstrukturänderung möglich sein kann. Ebenso wird bei einer oben beschriebenen Verhinderung eines Zugriffs auf veränderte Datenstrukturen der zugreifenden Anzeige- und Bedieneinheit im Zugriffsergebnis diese Datenstrukturänderung mitgeteilt.

Der Zustand der Änderungsinformation, dass sich die Datenstruktur geändert hat, wird zum Beispiel in der Automatisierungseinheit für die angemeldete Anzeige- und Bedieneinheit erst dann zurückgesetzt, wenn:
- die angemeldete Anzeige- und Bedieneinheit auf diese Variable zugreift und somit die angemeldete Anzeige- und Bedieneinheit die Information erhält, dass sich die Variable sich geändert hat; vor dem nächsten Zugriff auf diese Datenstruktur aktualisiert die Anzeige- und Bedieneinheit ihre Variablenbeschreibung der betroffenen Datenstruktur, und/oder
- sich die angemeldete Anzeige- und Bedieneinheit erneut anmeldet, d. h. den Anmeldevorgang wiederholt; die in der Automatisierungseinheit bestehende Anmeldung wird durch die neue Anmeldung ersetzt, und/oder
- aufgrund einer Änderungsmeldung, die angemeldete Anzeige- und Bedieneinheit der Automatisierungseinheit meldet, dass sie die Variablenbeschreibung der Datenstruktur aktualisiert hat.

Als Zugriffe sind sowohl Schreib- als auch Lesezugriffe auf die Variablen in den Datenstrukturen möglich. Dabei ist in einer besonderen Ausführung der Erfindung eine Unterscheidung zwischen diesen Zugriffsarten implementiert. Ein Lesezugriff wird auch bei Veränderung erlaubt, ein Schreibzugriff jedoch nicht.

Ein solches Verfahren erfordert als zusätzlich abzuspeichernde Daten die Änderungsinformationen, des Weiteren wird zusätzliche Laufzeit benötigt. Vorteilhaft ist jedoch ein sicherer Zugriff auf veränderbare Datenstrukturen. Damit wird jeglicher Zugriff auf inkonsistente Daten verhindert.

Dieser Aufwand kann jedoch in einer besonderen Ausführungsform der Erfindung reduziert werden, indem eine Änderung der Datenstrukturen und die erfindungsgemäße Strukturüberwachung der Datenstrukturänderungen nur innerhalb festlegbarer Zeiträume möglich ist, beispielsweise nur innerhalb einer Testphase oder zu bestimmten Tageszeiten oder Auslastungszeiten der Automatisierungseinheit. Weiterhin kann durch Einschränkung des Umfanges der veränderbaren Datenstrukturen auf besonders kritische Datenstrukturen der Aufwand für die Speicherung und Verwaltung der Änderungsinformationen niedrig gehalten werden.

Aufgrund einer Mitteilung einer Datenstrukturveränderung nach einer Zugriffsverweigerung auf eine bestimmte Variable wird in einer weiteren Ausführungsform der Erfindung von der zugreifenden Anzeige- und Bedieneinheit bei der Programmeinheit abgefragt, welche konkrete Änderung bezüglich dieser Variable vorgenommen wurde. Die Programmiereinheit teilt diese Änderung dann der zugreifenden Anzeige- und Bedieneinheit mit, so dass die Anzeige- und Bedieneinheit mit dieser Information den veränderten Offset der neuen Datenstruktur erhält und ihre Datenstruktur bezüglich dieser Variable auf die Datenstruktur der Programmiereinheit abstimmt. In einem erneuten Zugriff auf diese Datenstruktur in der Automatisierungseinheit kann dann die entsprechend geänderte Variable richtig adressiert werden.

In einer weiteren Ausgestaltung wird von der Automatisierungseinheit bei geänderten Datenstrukturen, ohne dass ein Zugriff einer Anzeige- und Bedieneinheit vorliegt, den angemeldeten Anzeige- und Bedieneinheiten mitgeteilt, dass eine Änderung vorgenommen wurde. Dabei fragen die betroffenen Anzeige- und Bedieneinheiten mit dieser Information bei der Programmiereinheit die konkrete Änderung ab.

Durch gezieltes Anmelden der Anzeige- und Bedieneinheiten bei Datenstrukturen, die für Änderungen vorgesehen sind, kann ein hoher Aufwand bei der Speicherung der Änderungsinformationen für alle in der Automatisierungseinheit gespeicherten Datenstrukturen vermieden werden.

Das erfindungsgemäße Verfahren kann vorteilhafterweise nachträglich in bestehende Automatisierungssysteme implementiert werden.

Die Aufgabe wird auch durch ein Automatisierungssystem gelöst, welches eine Automatisierungseinheit, eine Programmiereinheit und wenigstens eine Anzeige- und Bedieneinheit umfasst. Bei dem Automatisierungssystem ist vorgesehen, eine von der Programmiereinheit vorgenommene Veränderung der Datenstruktur, in einer Änderungsinformation in der Automatisierungseinheit zu speichern. Dadurch wird bei einem Zugriff der Anzeige- und Bedieneinheiten auf die Datenstruktur in der Automatisierungseinheit eine Änderung festgestellt und den zugreifenden Anzeige- und Bedieneinheiten mitgeteilt, so dass diese bei einem erneuten Zugriff die neuen Adressierungswerte kennen und ein fehlerfreier Zugriff erfolgen kann.

Weitere Vorteile und Einzelheiten ergeben sich aus der nachfolgenden Beschreibung von Ausführungsbeispielen.

Die Erfindung wird nachstehend ohne Beschränkung des allgemeinen Erfindungsgedankens anhand von Ausführungsbeispielen unter Bezugnahme auf die Zeichnungen exemplarisch beschrieben.

Es zeigen:
- Fig. 1: Blockschaltbild eines Automatisierungssystems mit Fehlzugriff
- Fig. 2: Blockschaltbild eines Automatisierungssystems mit Änderungsinformation in der Automatisierungseinheit
- Fig. 3: Ablaufdiagramm mit mehreren Möglichkeiten zur Vermeidung von Fehlzugriffen

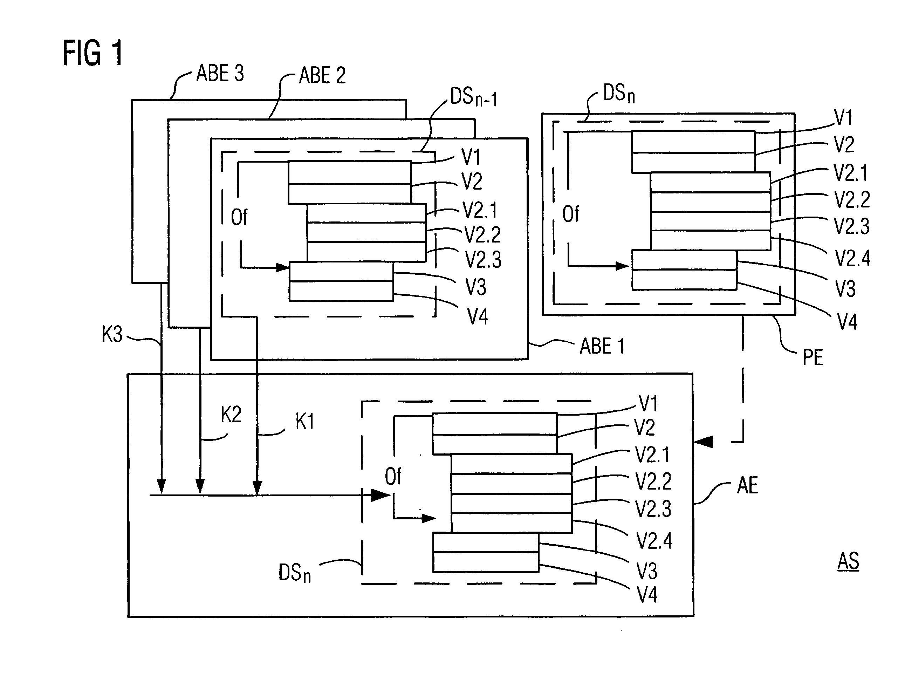

In Figur 1 ist ein Automatisierungssystem AS dargestellt. Dieses umfasst eine Automatisierungseinheit AE, eine Programmiereinheit PE und mehrere Anzeige- und Bedieneinheiten ABE1 - ABE3. In der Automatisierungseinheit AE ist eine Datenstruktur DSₙ mit mehreren Variablen V1 bis V4 gespeichert. Diese Datenstruktur DSₙ befindet sich auch in der Programmiereinheit PE. In Figur 1 ist ein Zustand dargestellt, bei dem die Datenstruktur DSₙ gerade von der Programmiereinheit verändert wurde. Die veränderte Datenstruktur DSₙ ist auch schon an die Automatisierungseinheit übertragen worden. In den auch an die Automatisierungseinheit angeschlossenen Anzeige- und Bedieneinheiten ABE1 - ABE3 ist noch eine veraltete Version der Datenstruktur DSₙ₋₁ gespeichert. Bei der neuen Datenstruktur DSₙ wurde die Variable V2.4 eingefügt. Mit Of ist in den Datenstrukturen DSₙ und DSₙ₋₁ ein Offset gekennzeichnet, der notwendig ist, um ein Variable zu adressieren. Dieser Offset Of stellt die oben beschriebene teilweise absolute Adressierung dar. Die Verbindungen K1 - K3 stellen Kommunikationsverbindungen dar, über die die Anzeige- und Bedieneinheiten ABE1 - ABE3 auf die Datenstruktur DSₙ in der Automatisierungseinheit AS zugreifen. Dabei wird zur Adressierung einer Variablen in einer Datenstruktur eine Datenbausteinnummer, ein Datenwort und die Länge der anzusprechenden Variablen verwendet. Diese Adressierung setzt sich dabei aus einem logischen Teil - der Datenbausteinnummer und einem absoluten Teil - dem Datenwort, welches für den Offset steht - zusammen. Der Einfachheit wegen ist hier jeweils nur eine Datenstruktur dargestellt, ebenso wurde auf eine Darstellung mehrerer Datenbausteine verzichtet. Der Offset der Variablen V3 hat sich durch das Hinzufügen der Variablen V2.4 verschoben. Bei einem Zugriff einer Anzeige- und Bedieneinheit, beispielsweise von ABE1 über die Kommunikationsverbindung K1 auf die Variable V3, wird der Offset oder das Datenwort der Datenstruktur verwendet, wie sie in der ABE 1 vorliegt. Wegen der Verwendung des Offset für die Datenstruktur DSₙ₋₁ mit einer teilweise absoluten Adressierung wird in der veränderten Datenstruktur DSₙ die Variable V2.4 gelesen oder beschrieben.

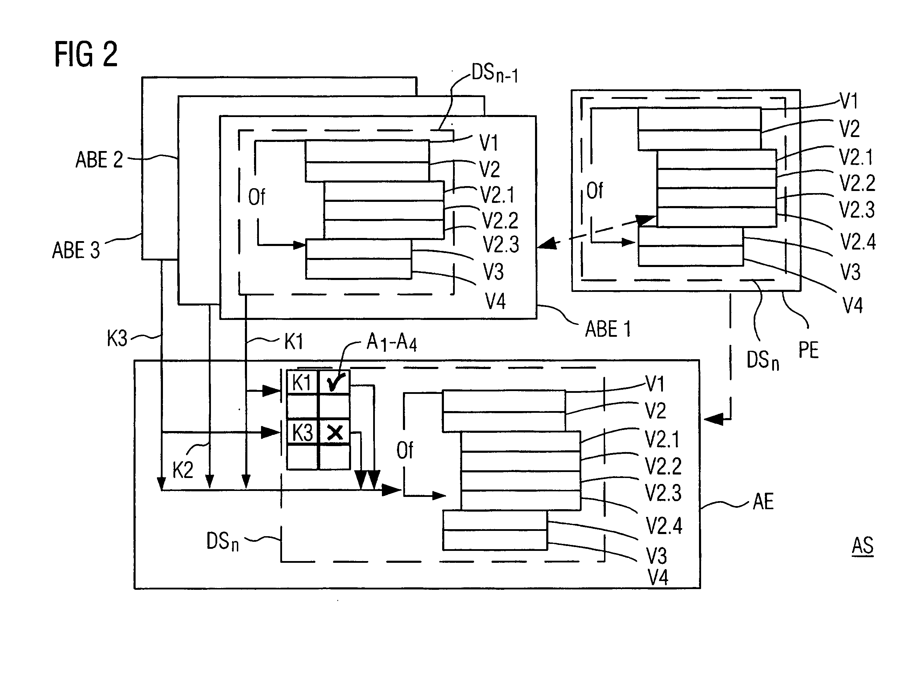

In Figur 2 ist eine erfindungsgemäße Ausgestaltung der Automatisierungseinheit dargestellt. Dazu sind die Änderungsinformationen A₁ - Aₙ in der Automatisierungseinheit AE gespeichert. Dabei sind beispielsweise für jede mögliche Kommunikationsverbindung K zwei Bit vorgesehen. In dem hier dargestellten Beispiel sind von ABE 1 und ABE 3 Verbindungen aufgebaut worden, wobei die beiden ABE1 und 3 sich mit den Kommunikationsverbindungen K1 und K3 bei der Automatisierungseinheit AE angemeldet haben. Aus der Änderungsinformation A₁ geht hervor, dass der Zugriff erlaubt ist, dargestellt durch ein Häkchen. Ebenso ist es möglich, durch entsprechende Kodierung der Änderungsinformation A₃, den Zugriff zu verweigern, beispielsweise durch einen Kreuz. Eine andere Kodierung kann einen Zugriff erlauben, obwohl eine Änderung der Datenstruktur vorliegt, wie im dargestellten Fall. In einem derartigen Fall wird diese Information der Anzeige- und Bedieneinheit mit dem Zugriffsergebnis mitgeteilt, dass ein eventueller Fehlzugriff wegen einer Datenstrukturänderung vorliegen kann. Die ABE 2 ist von dieser Überwachung ausgenommen, sie hat sich nicht bei der Automatisierungseinheit angemeldet. Hier wird beispielsweise zusätzliches Wissen berücksichtigt, dass Variablen, auf die die ABE2 normalerweise zugreift, nicht geändert werden und Änderungen sich auch nicht auf einen Zugriff von ABE 2 auswirken oder ABE 2 nur auf einen nicht änderbaren Datenbaustein zugreift.

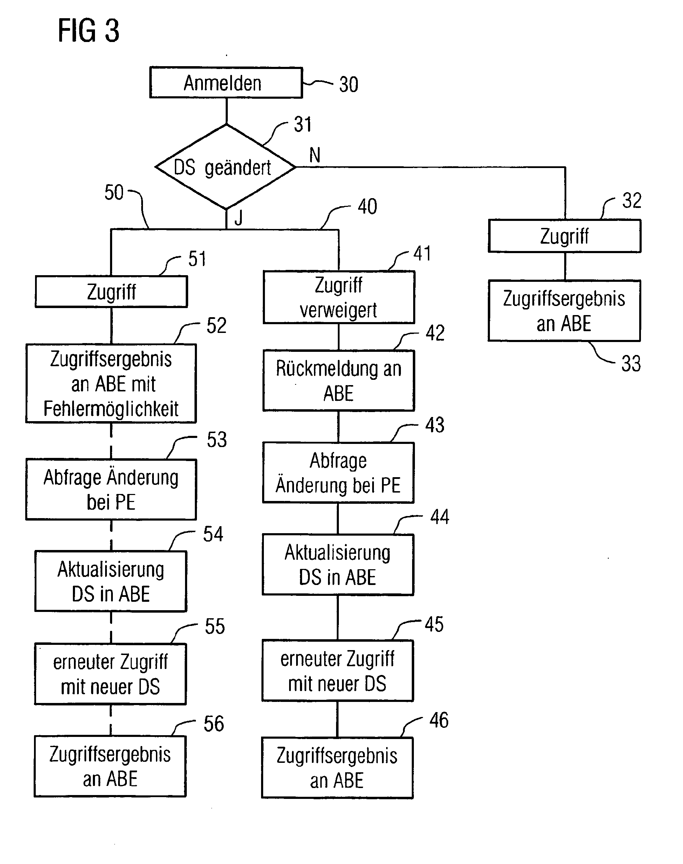

In Figur 3 ist ein Ablaufdiagramm dargestellt, in dem mehrere Möglichkeiten zur Vermeidung von Fehlzugriffen auf veränderte Datenstrukturen aufgezeigt werden. In Schritt 30 meldet sich eine Anzeige- und Bedieneinheit ABE bei der Datenstruktur DS, die zu überwachen ist in der Automatisierungseinheit AE an. Die Anmeldung wird registriert. In Schritt 31 wird festgestellt, ob sich die Datenstruktur bezüglich der entsprechenden Variablen verändert hat. Wurde keine Veränderung von der Programmiereinheit vorgenommen, erfolgt in Schritt 32 ein Zugriff auf die adressierte Variable und im nächsten Schritt 33 wird das Zugriffsergebnis an die zugreifende ABE übermittelt. Der Pfad 40 zeigt die Alternative, dass eine Datenstrukturveränderung vorliegt und der Zugriff von der Automatisierungseinheit verweigert wird (Schritt 41). Dann wird von der Automatisierungseinheit AE der zugreifenden Anzeige- und Bedieneinheit ABE mitgeteilt, dass eine Datenstrukturveränderung bezüglich der abgefragten Variablen vorliegt (Schritt 42). Die zugreifende Anzeige- und Bedieneinheit ABE fragt in Schritt 43 bezüglich der Variablen bei der Programmiereinheit PE die konkrete Änderung des Offsets der Variablen ab und aktualisiert in Schritt 44 ihre Datenstruktur bezüglich der neuen Variablen. Mit der aktualisierten Datenstruktur, insbesondere mit dem neuen Offset, wird die Variable in Schritt 45 erneut abgefragt, wobei dies sowohl ein Lese- als auch ein Schreibvorgang sein kann. Das korrekte Zugriffsergebnis wird dann in Schritt 46 an die zugreifende Anzeige- und Bedieneinheit ABE übermittelt.

In Pfad 50 ist eine Möglichkeit dargestellt, bei der trotz einer Datenstrukturänderung ein Zugriff auf die Datenstruktur ermöglicht wird (Schritt 51). Bei der Übermittlung des Zugriffergebnisses wird der zugreifenden Anzeige- und Bedieneinheit ABE jedoch mitgeteilt, dass ein Fehlzugriff wegen einer Datenstrukturänderung vorliegen könnte. Die zugreifende Anzeige- und Bedieneinheit ABE kann dann in Abhängigkeit einer Qualitäts- oder Zuverlässigkeitsstufe von der Programmiereinheit PE in Schritt 53 die konkrete Änderung abfragen und somit analog zu den Schritten 43- 46 zu einem korrekten Zugriffsergebnis gelangen.

In einer weiteren nicht dargestellten Ausführung wird den angemeldeten Anzeige- und Bedieneinheiten ABEs nach einer Änderung der Datenstruktur in der Automatisierungseinheit AE durch die Programmiereinheit PE mitgeteilt, dass sich die Datenstruktur geändert hat, so dass diese Anzeige- und Bedieneinheiten ABEs bei der Programmiereinheit PE die neuen Offsetwerte der geänderten Datenstruktur abfragen und die Datenstruktur auf den Anzeige- und Bedieneinheiten ABEs aktualisieren können. Diese Möglichkeit wird als Korrektur aufgrund einer Meldung von der Automatisierungseinheit AE an die Anzeige- und Bedieneinheiten ABE bezeichnet.

## Patentansprüche

1. Verfahren zur Vermeidung von Fehlzugriffen auf Datenstrukturen (DS), bei dem mittels einer Programmiereinheit (PE) eine auf einer Automatisierungseinheit (AE) ausgeführte und/oder gespeicherte Datenstruktur verändert wird und mittels einer Anzeige- und Bedieneinheit (ABE) auf die Datenstruktur zugegriffen wird, wobei sich die zugreifenden Anzeige- und Bedieneinheiten (ABE) bei der Automatisierungseinheit (AE) anmelden und den Anzeige- und Bedieneinheiten (ABE) Veränderungen der Datenstruktur (DS) mitgeteilt werden, **dadurch gekennzeichnet, dass** in Abhängigkeit einer Änderungsinformation (A₁ - Aₙ) in der Automatisierungseinheit beim Zugriff der Anzeige- und Bedieneinheiten auf die Datenstruktur festgestellt wird, ob die Datenstruktur verändert wurde, wobei eine Speicherung von Änderungsinformationen (A₁ - Aₙ) vorgesehen ist, mittels derer eine Änderung der Datenstruktur in der Automatisierungseinheit überprüfbar ist, und wobei vorgesehen ist, eine Änderung der Datenstruktur den Anzeige- und Bedieneinheiten mitzuteilen, so dass diese Anzeige- und Bedieneinheiten bei einem erneuten Zugriff die neuen Adressierungswerte erkennen und ein fehlerfreier Zugriff erfolgen kann.

2. Verfahren nach Anspruch 1,
**dadurch gekennzeichnet, dass** trotz einer vorgenommenen Veränderung der Datenstruktur ein Zugriff einer Anzeige- und Bedieneinheit ermöglicht wird, wobei die Änderung der Datenstruktur in einem der Anzeige- und Bedieneinheit übermittelten Zugriffsergebnis mitgeteilt wird.

3. Verfahren nach einem der vorherigen Ansprüche,
**dadurch gekennzeichnet, dass** wenigstens einer bei der Automatisierungseinheit angemeldeten Anzeige- und Bedieneinheit von der Automatisierungseinheit mitgeteilt wird, dass eine Änderung vorgenommen wurde und dass diese Anzeige- und Bedieneinheit bei der Programmiereinheit die konkrete Änderung abfragt und die neue Datenstruktur übernimmt.

4. Verfahren nach einem der vorherigen Ansprüche,
**dadurch gekennzeichnet, dass** eine Überwachung von Änderungen der Datenstruktur mittels Anmeldung der Anzeige- und Bedieneinheiten bei der Datenstruktur der Automatisierungseinheit nur zu festlegbaren Zeiten und/oder Zuständen der Automatisierungseinheit erfolgt.

5. Verfahren nach einem der vorherigen Ansprüche,
**dadurch gekennzeichnet, dass** eine Überwachung der Änderung der Datenstruktur der Automatisierungseinheit nur für einen festlegbaren Bereich der Datenstruktur vorgenommen wird.

6. Verfahren nach einem der vorherigen Ansprüche,
**dadurch gekennzeichnet, dass** der Zustand der Änderungsinformation, dass sich die Datenstruktur geändert hat, in der Automatisierungseinheit für die angemeldete Anzeige- und Bedieneinheit erst dann zurücksetzt, wenn:
- die angemeldete Anzeige- und Bedieneinheit auf diese Variable zugreift und somit die angemeldete Anzeige- und Bedieneinheit die Informationen erhält, dass sich die Variable geändert hat; vor dem nächsten Zugriff auf diese Datenstruktur aktualisiert die Anzeige- und Bedieneinheit ihre Variablenbeschreibung der betroffenen Datenstruktur, und/oder
- sich die angemeldete Anzeige- und Bedieneinheit erneut anmeldet; die in der Automatisierungseinheit bestehende Anmeldung wird durch die neue Anmeldung ersetzt, und/oder
- aufgrund einer Änderungsmeldung, die angemeldete Anzeige- und Bedieneinheit der Automatisierungseinheit meldet, dass sie die Variablenbeschreibung der Datenstruktur aktualisiert hat.

7. Automatisierungssystem (AS) umfassend:
eine Automatisierungseinheit (AE) mit einer Datenstruktur (DS),
eine Programmiereinheit (PE), die zur Veränderung der Datenstruktur in der Automatisierungseinheit vorgesehen ist, und wenigstens eine Anzeige- und Bedieneinheit (ABE) zur Steuerung und Überwachung der Automatisierungseinheit, zur Durchführung eines Verfahrens gemäß den Ansprüchen 1 bis 6.

## Claims

1. Method for avoiding failed access to data structures (DS), in which a data structure executed and/or stored on an automation unit (AE) is changed by means of a programming unit (PE) and the data structure is accessed by means of a display and operating unit (ABE), with the accessing display and operating units (ABE) signing on at the automation unit (AE) and the display and operating units (ABE) being notified about changes to the data structure (DS), **characterized in that**, depending on change information (A₁ - Aₙ) in the automation unit, it is established on access by the display and operating units to the data structure whether the data structure has been changed, with a storage of change information (A₁ - Aₙ) being provided, by means of which a change to the data structure in the automation unit is able to be checked and with there being provision for a change to the data structure to be notified to the display and operating units, so that these display and operating units recognize the new addressing values when there is renewed access and error-free access can occur.

2. Method according to claim 1,
**characterized in that**, despite a change having been made to the data structure, access by a display and operating unit is enabled, with the change to the data structure being notified in an access result transferred to the display and operating unit.

3. Method according to one of the previous claims,
**characterized in that** at least one display and operating unit signed on at the automation unit is notified by the automation unit that a change has been made, and that this display and operating unit queries the actual change at the programming unit and accepts the new data structure.

4. Method according to one of the previous claims,
**characterized in that** changes to the data structure are monitored by means of notification to the display and operating units from the data structure of the automation unit only at definable times and/or states of the automation unit.

5. Method according to one of the previous claims,
**characterized in that** the change to the data structure of the automation unit is only monitored for a definable area of the data structure.

6. Method according to one of the previous claims,
**characterized in that** the status of the change information that the data structure has changed is only reset in the automation unit for the signed-on display and operating unit if:
- the signed-on display and operating unit is accessing this variable and thus the signed-on display and operating unit receives the information that the variable has changed; before the next access to this data structure the display and operating unit updates its variable description of the data structure involved and/or
- the signed-on display and operating unit signs on again; the existing sign on in the automation unit is replaced by the new sign on and/or
- as a result of a change message the signed-on display and operating unit informs the automation unit that it has updated the variable description of the data structure.

7. Automation system (AS) comprising:
An automation unit (AE) with a data structure (DS),
a programming unit (PE), which is provided for changing the data structure in the automation unit, and at least one display and operating unit (ABE) for control and monitoring of the automation unit for executing a method in accordance with claims 1 to 6.

## Revendications

1. Procédé pour éviter des erreurs d'accès à des structures de données (DS), dans lequel on modifie au moyen d'une unité de programmation (PE) une structure de données réalisée et/ou mémorisée sur une unité d'automatisation (AE) et on accède au moyen d'une unité d'affichage et de commande (ABE) à la structure de données, les unités d'affichage et de commande (ABE) se connectant à l'unité d'automatisation (AE) et des modifications de la structure de données (DS) étant communiquées aux unités d'affichage et de commande (ABE),
**caractérisé par le fait que**, en fonction d'une information de modification (A₁ à Aₙ), on détermine dans l'unité d'automatisation lors de l'accès des unités d'affichage et de commande à la structure de données si la structure de données a été modifiée, sachant qu'il est prévu une mémorisation d'informations de modification (A₁ à Aₙ) au moyen de laquelle une modification de la structure de données dans l'unité d'automatisation peut être vérifiée et qu'il est prévu de communiquer une modification de la structure de données aux unités d'affichage et de commande de telle sorte que ces unités d'affichage et de commande peuvent reconnaître les nouvelles valeurs d'adressage lors d'un nouvel accès et peuvent alors effectuer un accès sans erreur.

2. Procédé selon la revendication 1,
**caractérisé par le fait que**, malgré une modification effectuée de la structure de données, un accès d'une unité d'affichage et de commande est permis, la modification de la structure de données étant communiquée dans un résultat d'accès transmis à l'unité d'affichage et de commande.

3. Procédé selon l'une des revendications précédentes,
**caractérisé par le fait que le fait qu'**une modification a été effectuée est communiqué à au moins une unité d'affichage et de commande connectée à l'unité d'automatisation et cette unité d'affichage et de commande demande à l'unité de programmation la modification concrète et prend en charge la nouvelle structure de données.

4. Procédé selon l'une des revendications précédentes,
**caractérisé par le fait qu'**une surveillance de modifications de la structure de données au moyen d'une connexion des unités d'affichage et de commande pour la structure de données de l'unité d'automatisation s'effectue seulement à des instants pouvant être fixés et/ou pour des états pouvant être fixés de l'unité d'automatisation.

5. Procédé selon l'une des revendications précédentes,
**caractérisé par le fait qu'**une surveillance de la modification de la structure de données de l'unité d'automatisation s'effectue seulement pour une zone pouvant être fixée de la structure de données.

6. Procédé selon l'une des revendications précédentes,
**caractérisé par le fait que** l'état de l'information de modification indiquant que la structure de données a été modifiée n'est remis à zéro dans l'unité d'automatisation pour l'unité d'affichage et de commande connectée que si :
- l'unité d'affichage et de commande connectée accède à cette variable et l'unité d'affichage et de commande connectée reçoit ainsi les informations indiquant que la variable a été modifiée ; avant le prochain accès à cette structure de données, l'unité d'affichage et de commande actualise sa description de variable de la structure de données concernée, et/ou
- l'unité d'affichage et de commande connectée se connecte à nouveau ; la connexion existante dans l'unité d'automatisation est remplacée par la nouvelle connexion, et/ou
- en raison d'un message de modification, l'unité d'affichage et de commande connectée signale à l'unité d'automatisation qu'elle a actualisé la description de variable de la structure de données.

7. Système d'automatisation (AS) comprenant :
une unité d'automatisation (AE) avec une structure de données (DS),
une unité de programmation (PE), qui est prévue pour la modification de la structure de données dans l'unité d'automatisation, et
au moins une unité d'affichage et de commande (ABE) pour la commande et la surveillance de l'unité d'automatisation,
pour la mise en oeuvre d'un procédé selon les revendications 1 à 6.
